# EUROPÄISCHE PATENTSCHRIFT

(11) **EP 0 749 614 B1**
(45) Veröffentlichungstag und Bekanntmachung des Hinweises auf die Patenterteilung: **14.07.1999**
(21) Anmeldenummer: 92909679.0
(22) Anmeldetag: 14.05.1992
(51) Int. Cl.: G06K 19/06, G06K 19/18

(54) **KARTENFÖRMIGER DATENTRÄGER**
DATA SUBSTRATE IN CARD FORM
SUPPORT DE DONNEES EN FORME DE CARTE

(30) Priorität: 14.05.1991 AT 98691; 18.02.1992 AT 27592
(43) Veröffentlichungstag der Anmeldung: 27.12.1996
(73) Patentinhaber: SkiData AG, 5083 Gartenau (AT)
(72) Erfinder: KOCZNAR, Wolfram, A-6020 Innsbruck (AT); WALLERSTORFER, Kurt, 5204 Irrsdorf 130 (AT)
(74) Vertreter: Hofinger, Engelbert, DDr.
(86) Internationale Anmeldenummer: AT9200070
(87) Internationale Veröffentlichungsnummer: WO9221105

(56) Entgegenhaltungen:
- EP-A- 0 079 047
- EP-A- 0 132 183
- WO-A-88/08592
- PATENT ABSTRACTS OF JAPAN vol. 8, no. 208 (P-302)21. September 1984; & JP,A,59 091 439 (TOPPAN INSATSU K) 26 May 1984
- PATENT ABSTRACTS OF JAPAN vol. 11, no. 178 (P-584)(2625) 9. Juni 1987; & JP,A,62 008 283 (MATSUSHITA ELECTRIC IND CO LTD) 16 January 1987

## Beschreibung

Die Erfindung betrifft einen kartenförmigen Datenträger, insbesondere Fahrkarte, Skipaß oder dergleichen, mit einem, einen Sende-Empfangsteil aufweisenden Elektronikmodul zur berührungslosen Kontrolle durch eine einen Sende-Empfangsteil aufweisende Kontrollstation.

Ein aus der AT-B-391 375 bekannter Datenträger enthält in einem Gehäuse einen Mikroprozessor, eine Sende-Empfangseinheit, ein Display, einen Schreib-Lese-Speicher, sowie eine Stromquelle. Das Gehäuse kann gemäß Fig. 4 dieser Druckschrift an einem kartenförmigen Unterteil vorgesehen sein, der mit einem zusätzlichen Beschriftungsfeld versehen ist. Des weiteren kann noch ein Foto des Inhabers am Datenträger vorgesehen sein. Der Datenträger ist aufgrund seiner Ausstattung für eine Vielzahl von Verwendungsmöglichkeiten geeignet, sodaß seine Gestehungskosten einen akzeptablen Prozentsatz des durch ihn verkörperten Wertes betragen.

Die Verwendung der aus der AT-B-391 375 bekannten Datenträger erscheint unrentabel, wenn sie einen geringeren Wert repräsentieren. Solche Datenträger werden z.B. an Skiliften für Einmalfahrten, als Halbtageskarten, Tageskarten oder auch Wochenkarten benötigt, wenn sie auf einzelne Lifte beschränkt sind, usw. Für Einmalfahrten werden meist Karten mit einem Magnetstreifen verwendet, die äußerst niedere Gestehungskosten aufweisen, wobei gemäß der AT-B-391 374 Kontrollstationen, die zur Kontrolle beider Datenträger geeignet sind, eingesetzt werden.

Es verbleibt somit ein Anwendungsbereich, nämlich der Bereich der beschränkt zu verwendenden Mehrfahrtenkarten, für den die Produktionskosten der Datenträger der AT-B-391 375 zu hoch sind und die Einsatzeignung der Magnetstreifenkarten zu gering ist. Ein in diesem Anwendungsbereich denkbarer kartenförmiger Datenträger ist der GB-A 2 237 479 zu entnehmen; diese enthält jedoch keine Details über den Aufbau des Datenträgers.

Die EP- A- 0 079 047 und die WO- A- 88/08592 zeigen kartenförmige Datenträger, bei denen ein Elektronikmoduk zwischen zwei weiteren Kartenschichten angeordnet ist. Die WO- A- 88/08592 weist zusätzlich noch äußere Schutzschichten auf. Die Identitätskarte der EP- A- 0 079 047 offenbart weiterhin ein Feld, auf dem personen bezogene Daten lesbar dargestellt sind. Weiterhin ist es aus dem Abstract der JP- A- 59 091 439 bekannt, auf einer Karte mittels einer thermosensitiven Schicht optische Informationen anzubringen.

Die Erfindung hat es sich daher zur Aufgabe gestellt, einen Datenträger der eingangs genannten Art zu schaffen, der vertretbare Gestehungskosten aufweist, über einen längeren Zeitraum verwendbar ist und die durch die berührungslose Kontrolle bekannten Vorteile für den Benützer bietet.

Erfindungsgemäß wird dies durch die im Kennzeidem des Anspruchs 1 genannten Merkmale erreicht.

Das zwischen den beiden inneren Schichten eingeschlossene Elektronikmodul, das insbesondere einen Mikrochip mit einem programmierbaren, nicht veränderbaren Speicher und eine mit dem Sende-Empfangsteil verbundene Antenne aufweist, über die die im Speicher enthaltenen Daten abgefragt werden und die benötigte Energie übertragen wird, weist im Vergleich zum Wert des Datenträgers, etwa als Tageskarte oder Wochenkarte, vertretbare Gestehungskosten auf. Das Elektronikmodul ist dabei insbesondere in einer Vertiefung zumindest einer inneren Schicht angeordnet.

Bei der Initialisierung des Datenträgers, das heißt bei dessen Ausgabe an der Kassa, werden die jeweiligen Daten des Datenträgers (Gültigkeit, Preis, etc.) in den programmierbaren Speicher, der beispielsweise eine ein> fache Gatteranordnung darstellt, eingeschrieben. Bei jeder Passage einer Kontrollstation können die Gültigkeitsdaten aus dem Speicher nunmehr auf Distanz überprüft werden, womit die Vorteile der berührungslosen Kontrolle gegeben sind. Durch die Ausbildung der Thermoschicht können zumindest einige der Daten visuell lesbar und für den Käufer überprüfbar gemacht werden. Ein wesentlicher Vorteil ergibt sich dabei dadurch, daß diese Datenträger bestimmte Informationen - beispielsweise den vorgesehenen Verwendungszweck als Tageskarte, Wochenkarte oder Wahlabonnement (wählbare Gültigkeitstage innerhalb eines größeren Zeitraums) - bereits im Mikrochip enthalten, neutral auf Vorrat liegen und damit auch an beliebiger anderer Stelle verkauft werden können. Bei der Initialisierung erfolgt dann die Zuordnung des Zeitpunktes des Gültigkeitsbeginns, der in den Speicher miteingelesen und auf die Thermoschicht aufgedruckt wird. Dies kann durch ein mit den entsprechenden Einrichtungen ausgestattetes Kontrollgerät erfolgen. Eine erste Ausführung sieht vor, daß eine innere Schicht eine vorgeformte Aufnahmeplatte und die zweite innere Schicht ein mit der Aufnahmeplatte verbundener Deckel ist. Die Aufnahmeplatte kann in hohen Stückzahlen vorgefertigt werden, wobei es besonders günstig ist, wenn die Aufnahmeplatte und der Deckel identisch ausgebildet sind. Das gesamte Elektronikmodul wird in die Aufnahmeplatte eingelegt und der Deckel geschlossen, wobei die Aufnahmeplatte und der Deckel anschließend in beliebiger Weise verbunden werden. In einer weiteren Ausführung ist an einer Seite des Kartenträgers eine Magnetschicht angeordnet. Somit können Daten sowohl in den Speicher als auch in die Magnetschicht eingeschrieben und auf die Thermoschicht aufgedruckt werden. Ist die Thermoschicht nur einseitig angeordnet, so kann die Magnetschicht an der zweiten Seite vorgesehen sein, wobei die Magnetschicht bevorzugt auf dem den Elektronikmodul einschließenden Deckel angeordnet sein kann.

Die Ausbildung der Magnetschicht hat darüber hinaus den Vorteil, daß bei Störungen der berührungslosen Kontrolle der Inhalt der Magnetschicht über einen herkömmlichen Magnetschichtleser abgefragt werden kann, soferne auf diesem die Initialisierung zusätzlich vermerkt wird.

Für die Initialisierung können an einer Seite elektrische Kontakte vorgesehen sein, über die die Daten in den Speicher einschreibbar sind, da dies die Initialisierungseinrichtung und den Mikrochip vereinfacht. Ist eine Magnetschicht vorhanden, sind die Kontakte bevorzugt an der Seite der Magnetschicht. Der Speicher des Mikrochips kann beispielsweise ein EPROM sein.

Bevorzugt ist weiters auch ein Foto des Inhabers anbringbar, das beispielsweise aufklebbar, auf die Thermoschicht aufdruckbar oder in anderer Weise vorsehbar ist.

Die Aufnahmeplatte und der Deckel bestehen bevorzugt aus Polyethylen, das bruchfest und leicht verformbar ist. Gegebenenfalls kann dafür auch Weich-PVC Verwendung finden.

Vorzugsweise sind die beiden Außenseiten des kartenförmigen Datenträgers mit einer Schutzschicht versehen, wobei die Thermoschicht durch die Schutzschicht hindurch beschriftbar ist. Unter der Schutzschicht kann beispielsweise auch das Foto vorgesehen werden. Als Material für die Schutzschicht ist beispielsweise ein Polycarbonat vorgesehen.

Ein Verfahren zur einfachen und billigen Herstellung kartenförmiger Datenträger sieht vor, daß Aufnahmeplatten mit Vertiefungen für einen Mikrochip und eine Antenne vorgefertigt werden, daß jeweils eine Aufnahmeplatte, ein Mikrochip samt Antenne, sowie ein die Aufnahmeplatte verschließender Deckel nacheinander in eine Form eingelegt werden, und daß die Aufnahmeplatte und der Deckel durch Anwendung von Ultraschall, Klebstoff oder Wärme und Druck zu einer Einheit verbunden werden.

Eine besonders vorteilhafte Ausführung des Verfahrens sieht vor, daß ein bahn- oder plattenförmiger Rohling zwischen zwei Walzen hindurchgeführt wird, wobei eine Walze die Vertiefungen formt, und daß der Rohling anschließend in eine Vielzahl von Aufnahmeplatten unterteilt wird. Insbesondere bei plattenförmigen Rohlingen ist es weiters auch denkbar, vor der Unterteilung die Elektronikmodule einzusetzen und eine Deckplatte aufzubringen, wobei die Verbindung zwischen dem Rohling und der Deckplatte unter dem Druck eines weiteren Walzenpaares erfolgen kann. Die nachfolgende Unterteilung führt dann bereits zu den fertigen Datenträgern.

Für die Herstellung thermobeschichteter Datenträger ist bevorzugt vorgesehen, daß der Rohling mit der Thermoschicht versehen wird, die durch die zweite Walze verdichtet und geglättet wird. Das Aufbringen der Thermoschicht kann nach einem Druckverfahren z.B. dadurch erfolgen. Soll der Datenträger auch mit der Magnetschicht versehen werden, so wird diese vorzugsweise mit der Schutzschicht versehen und mitverpreßt.

Nachstehend wird nun die Erfindung anhand der Figuren der beiliegenden Zeichnungen näher beschrieben.

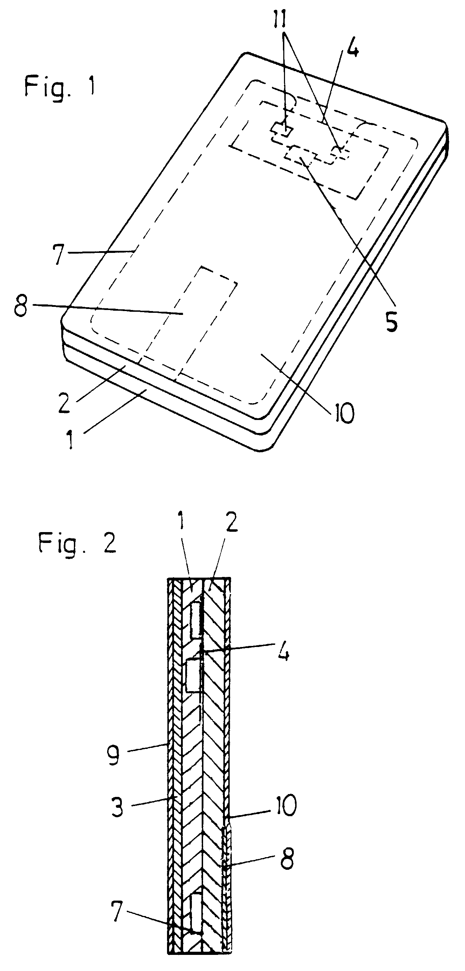

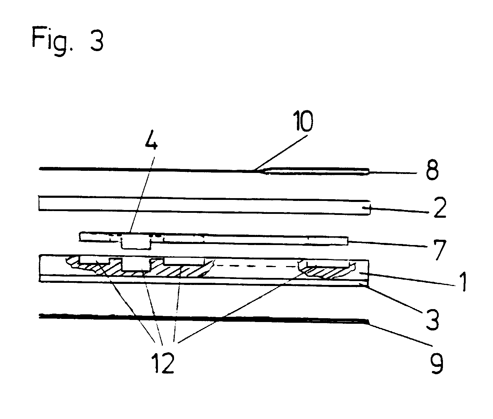

Fig. 1 zeigt eine schematische Ansicht eines erfindungsgemäßen Datenträgers, Fig. 2 einen mittleren Längsschnitt durch den Datenträger, und Fig.3 eine Explosionsdarstellung der einzelnen Schichten.

Ein Datenträger weist die Form einer Karte auf und bildet insbesondere eine wiederholt verwendbare Fahrkarte für Wintersportanlagen, beispielsweise eine Halbtages-, Tages- oder Mehrtagekarte. Der Datenträger besteht aus einem mehrschichtigen Kartenkörper, der insbesondere aus Kunststoff gefertigt ist. Eine erste innere Schicht ist als Aufnahmeplatte 1 mit Vertiefungen 12 ausgebildet, die durch eine eine zweite innere Schicht bildenden Deckel 2 überdeckt sind. Beide inneren Schichten bestehen aus Polyethylen oder aus einem Weichpolyvinylchlorid. In die Vertiefungen 12 ist ein Elektronikmodul, bestehend aus einem Mikrochip 4 und einer Antenne 7 eingelegt. Der Mikrochip 4 ist mit einer integrierten Schaltung versehen und umfaßt einen durch eine Gatteranordnung gebildeten Speicher 5, insbesondere ein EPROM und einen Sende-Empfangsteil 11. Vom Sende-Empfangsteil 11 erstreckt sich die Antenne 7 etwa parallel zu den Rändern der Aufnahmeplatte 1. Die notwendige Energie wird ebenfalls über die Antenne 7 und den Sende-Empfangsteil 11 aufgenommen. Die Abfrage der Daten erfolgt berührungslos beim Durchgang durch eine Kontrollstation, die über die entsprechende Ausstattung, also eine Sende-Empfangseinrichtung einen Mikroprozessor usw. verfügt. Durch die berührungslose Kontrolle kann der kartenförmige Datenträger beliebig am Körper getragen werden, beispielsweise in die Tasche eines Anoraks eingesteckt sein. Außenseitig kann je eine Schutzschicht 9,10 aus Polycarbonat oder Hartpolyvinylchlorid vorgesehen sein. Die Schutzschicht 9 überdeckt eine Thermoschicht 3, die an der Aufnahmeplatte 1 vorgesehen ist. Unter der Schutzschicht 10, die den Deckel 2 überdeckt, kann in dem vom Mikrochip 4 abgewandten Bereich eine Magnetschicht 8 in Form eines Magnetstreifens angeordnet sein.

Der Speicher 5 und die gegebenenfalls vorgesehene Magnetschicht 8 enthalten die Stammdaten des Datenträgers, also Informationen über die Art der Fahrkarte usw. Bei der Initialisierung werden zusätzlich der Zeitpunkt des Gültigkeitsbeginns in den Speicher 5 eingeschrieben, wofür gegebenenfalls auch Kontakte vorgesehen sein können, die in der Schutzschicht 10 freiliegen. Einige der Daten, zumindest jene über die Gültigkeit werden gleichzeitig auf die Thermoschicht 3 visuell lesbar aufgedruckt. Ausgabe bzw. Initialisierung des Datenträgers sind wesentlich vereinfacht, da die Datenträger zu jedem beliebigen Zeitpunkt und an beliebigen Orten verkauft werden können. Bei der Erstverwendung werden dann nur die Gültigkeitsdaten eingelesen und aufgedruckt, was nun nicht mehr an der Kassa erfolgt, sondern mittels einer entsprechende Einrichtungen aufweisenden Kontrollstation. Während der weiteren Verwendung des Datenträgers erfolgt die Kontrolle berührungslos. Magnetschicht 8 und Kontakte werden hiefür nicht benötigt.

Werden für die Initialisierung keine Kontakte vorgesehen, wird auch diese drahtlos durchgeführt. Die Initialisierung muß im übrigen nicht den Aufdruck eines Gültigkeitsdatums beinhalten, sondern kann je nach Verwendungszweck auch andere Daten auf der Thermoschicht sichtbar machen, beispielsweise eine definierte Eingangsstelle oder dergleichen.

Besonders vorteilhaft ist die Herstellung des Datenträgers, wenn alle Schichten gemeinsam verpreßt und verbunden werden. Hiezu werden gemäß Fig. 3 die einzelnen Schichten und Teile in eine entsprechende Form eingelegt, wobei zuunterst die Aufnahmeplatte 1 mit der Thermoschicht 3 eingelegt wird. In die Vertiefungen 12 der Aufnahmeplatte 1 werden der Mikrochip 4 und die Antenne 7 eingesetzt. Hierauf wird der Deckel 2 gelegt und abschließend bevorzugt die mit der Magnetschicht 8 versehene zweite Schutzschicht 10 aufgelegt. Die Form wird geschlossen, wobei sich die einzelnen Schichten 1,2,10 durch Wärme, durch Ultraschall oder durch Klebstoff jeweils in Kombination mit dem Druck der Form zur einstückigen Karte verbinden.

Ein rationelles Herstellungsverfahren sieht das Bedrucken eines bahn- oder plattenförmigen Rohlings von Polyethylen mit der Thermoschicht 3 vor. Der beschichtete Rohling wird dann durch ein Walzenpaar geführt, wobei eine Walze mit glatter Mantelfläche die Thermoschicht verdichtet und glättet, und die zweite Walze mit Erhebungen versehen ist, die eine Vielzahl von Vertiefungen 12 in den Rohling prägt. Es entstehen zusammenhängende, thermobeschichtete Aufnahmeplatten 3, die dann zerteilt werden. Es ist aber auch möglich, den Rohling mit den Elektronikmodulen zu bestücken, eine Deckbahn aufzulegen und die Verpressung durch ein zweites Walzenpaar vorzunehmen. Auch die Schutzschichten 9,10 können vor der Unterteilung aufgetragen werden.

Der Datenträger bietet somit alle Vorteile der berührungslosen Kontrolle, insbesondere per Funk, stellt jedoch einen billigen Massenartikel dar, der nach seiner Verwendung auch weggeworfen werden kann. Äußerlich unterscheidet er sich von bisher verwendeten Magnetstreifenkarten, die in den Kontrolleser eingeschoben werden müssen, nur durch eine geringfügige größere Dicke.

## Patentansprüche

1. Kartenförmiger Datenträger, insbesondere Fahrkarte, Skipaß oder dergleichen, mit einem mehrschichtigen Kartenkörper, der an zumindest einer Außenseite eine transparente Schutzschicht (9) aufweist, mit einem mit Daten beschreibbaren Elektronikmodul, das einen Sende-Empfangsteil (11) aufweist und zwischen zwei inneren Schichten (1,2) des Kartenkörpers angeordnet ist, dadurch gekennzeichnet, daß zumindest an einer Seite des Kartenkörpers eine durch die Schutzschicht (9) hindurch mit zumindest einem Teil der in das Elektronikmodul einschreibbaren Daten visuell lesbar beschriftbare Thermoschicht (3) angeordnet ist.

2. Datenträger nach Anspruch 1, dadurch gekennzeichnet, daß eine innere Schicht eine vorgeformte Aufnahmeplatte (1) und die zweite innere Schicht ein Deckel (2) ist, wobei die Aufnahmeplatte (1) und der Deckel (2) identisch ausgebildet sind.

3. Datenträger nach Anspruch 2, dadurch gekennzeichnet, daß die Aufnahmeplatte (1) und der Deckel (2) aus Polyethylen bestehen.

4. Datenträger nach einem der Ansprüche 1 bis 3, dadurch gekennzeichnet, daß an einer Seite des Kartenkörpers eine Magnetschicht (8) angeordnet ist.

5. Datenträger nach Anspruch 1 und 4, dadurch gekennzeichnet, daß die Magnetschicht (8) auf der der Thermoschicht (3) gegenüberliegenden Seite des Kartenkörpers angeordnet ist.

6. Datenträger nach Anspruch 5, dadurch gekennzeichnet, daß an der die Magnetschicht (8) aufweisenden Seite elektrische Kontakte (6) vorgesehen sind.

7. Datenträger nach einem der Ansprüche 4 bis 6, dadurch gekennzeichnet, daß die Magnetschicht (8) auf der Innenseite einer Schutzschicht (9,10) aufgebracht ist.

8. Datenträger nach Anspruch 7, dadurch gekennzeichnet, daß die Schutzschicht (9,10) aus Polycarbonat besteht.

9. Verfahren zur Herstellung eines kartenförmigen Datenträgers mit einem einen Sendeempfangsteil aufweisenden Elektronikmodul, wobei eine Aufnahmeplatte (1) mit einer Vertiefung (12) für das Elektronikmodul vorgefertigt wird, das Elektronikmodul in die Vertiefung (12) eingelegt wird, und die Aufnahmeplatte (1) und ein Deckel (2) durch Anwendung von Ultraschall, Klebstoff oder Wärme und Druck zu einer Einheit verbunden werden, dadurch gekennzeichnet, daß ein bahn- oder plattenförmiger Rohling mit einer durch eine außenseitige Schutzschicht (9) hindurch beschriftbaren Thermoschicht (3) versehen und zwischen zwei Walzen hindurchgeführt wird, wobei eine Walze die Vertiefungen (12) formt, und die Thermoschicht (3) durch die zweite Walze verdichtet und geglättet wird, daß der Rohling anschließend mit der Schutzschicht (9) versehen und in eine Vielzahl von Aufnahmeplatten (1) unterteilt wird, und daß jeweils eine mit der durch die Schutzschicht (9) hindurch beschriftbaren Thermo Schicht (3) beschichtete Aufnahmeplatte (1), das einen Mikrochip (4) und eine Antenne (7)umfassende Elektronikmodul, sowie der die Aufnahmeplatte (1) verschließende Deckel (2) nacheinander in eine Form eingelegt und zur Einheit verbunden werden.

10. Verfahren nach Anspruch 9, dadurch gekennzeichnet, daß auf den Deckel (2) eine mit einer Magnetschicht versehene Schutzschicht (10) aufgelegt und mitverpreßt wird.

## Claims

1. A card-shaped data carrier, particularly a travel ticket, ski pass or the like, with a multi-layer card body which is provided on at least one outer side with a transparent protective layer (9), with an electronic module on which data may be written, having a transmitter-receiver part (11) and disposed between two inner layers (1, 2) of the card body, characterised in that there is on at least one side of the card body a heat-responsive layer (3) on which at least a part of the data which may be written into the electronic module can be shown in a visually legible fashion through the protective layer (9).

2. A data carrier according to Claim 1, characterised in that an inner layer is a pre-formed housing plate (1) and the second inner layer is a cover (2), the housing plate (1) and the cover (2) being of identical construction.

3. A data carrier according to Claim 2, characterised in that the housing plate (1) and the cover (2) consist of polyethylene.

4. A data carrier according to one of Claims 1 to 3, characterised in that a magnetic layer (8) is disposed on one side of the card body.

5. A data carrier according to Claim 1 and 4, characterised in that the magnetic layer (8) is disposed on that side of the card body which is opposite the heat-responsive layer (3).

6. A data carrier according to Claim 5, characterised in that electric contacts (6) are provided on the side comprising the magnetic layer (8).

7. A data carrier according to one of Claims 4 to 6, characterised in that the magnetic layer (8) is applied to the inside face of a protective layer (9, 10).

8. A data carrier according to Claim 7, characterised in that the protective layer (9, 10) consists of polycarbonate.

9. A method of producing a card-shaped data carrier with an electronic module comprising a transmitter-receiver part, a housing plate (1) being prefabricated with a depression (12) for the electronic module, the electronic module being placed in the depression (12) and the housing plate (1) and the cover (2) being combined into one unit by an application of ultra-sound, adhesive or heat and pressure, characterised in that a strip or sheet-like blank is provided with a heat-responsive layer (3) which can be written upon through an external protective layer (9), and is passed between two rollers, one roller forming the depressions (12) and the heat-responsive layer (3) being compressed by the second roller and smoothed, and in that the blank is then provided with the protective layer (9) and subdivided into a plurality of housing plates (1) and in that in each case a housing plate (1) coated with the heat-responsive layer (3) which can be written upon through the protective layer (9), the electronic module comprising a microchip (4) and an antenna (7), as well as the cover (2) occluding the housing plate (1) are placed one after another into a mould and combined into one unit.

10. A method according to Claim 9, characterised in that a protective layer (10) provided with a magnetic layer is placed on and pressure-moulded together with the cover (2).

## Revendications

1. Support de données en forme de carte, en particulier carte de transport, forfait de ski ou analogue, avec un corps de carte multicouches, qui présente une couche protectrice transparente (9) sur au moins une face externe, avec un module électronique sur lequel peuvent être inscrites des données, qui présente un élément émetteur-récepteur (11) et qui est disposé entre deux couches internes (1, 2) du corps de la carte,
caractérisé en ce qu'au moins sur un côté du corps de la carte est disposée une couche thermique (3) sur laquelle on peut inscrire des données et lisible visuellement à travers la couche protectrice (9) avec au moins une partie des données susceptibles d'être inscrites dans le module électronique.

2. Support de données selon la revendication 1, caractérisé en ce qu'une couche intérieure est une plaque d'enregistrement (1) préformée et la deuxième couche intérieure est un couvercle (2), la plaque d'enregistrement (1) et le couvercle (2) étant conçus de façon identique.

3. Support de données selon la revendication 2, caractérisé en ce que la plaque d'enregistrement (1) et le couvercle (2) sont réalisés en polyéthylène.

4. Support de données selon les revendications 1 à 3, caractérisé en ce qu'une couche magnétique (8) est disposée d'un côté du corps de la carte.

5. Support de données selon les revendications 1 et 4, caractérisé en ce que la couche magnétique (8) est disposée du côté du corps de la carte qui est opposé à la couche thermique (3),.

6. Support de données selon la revendication 5, caractérisé en ce que des contacts électriques (6) sont prévus du côté présentant la couche magnétique (8).

7. Support de données selon l'une des revendications 4 à 6, caractérisé en ce que la couche magnétique (8) est déposée sur la face interne d'une couche protectrice (9, 10).

8. Support de données selon la revendication 7, caractérisé en ce que la couche protectrice (9, 10) est réalisée en polycarbonate.

9. Procédé de production d'un support de données en forme de carte avec un module électronique présentant un élément émetteur-récepteur, une plaque d'enregistrement (1) avec un renfoncement (12) pour le module électronique étant préfabriquée, le module électronique étant apposé dans le renforcement (12), et la plaque d'enregistrement (1) et un couvercle (2) étant associés, en utilisant des ultrasons, de l'adhésif ou de la chaleur et une pression, pour former une unité,
caractérisé en ce qu'une préforme ayant la forme d'une bande ou d'une plaque est dotée d'une couche thermique (3) sur laquelle on peut inscrire des données au travers d'une couche protectrice (9) située du côté extérieur, et introduite entre deux cylindres, moyennant quoi un cylindre forme les renfoncements (12), et la couche thermique (3) est compactée et aplanie par le deuxième cylindre, en ce que la préforme est ensuite dotée de la couche protectrice (9) et subdivisée en une pluralité de plaques d'enregistrement (1), et en ce que chaque fois la bande d'enregistrement (1) revêtue de la couche thermique (3) sur laquelle on peut inscrire des données au travers de la couche protectrice (9), le module électronique comprenant une micropuce (4) et une antenne (7), ainsi que le couvercle (2) recouvrant la plaque d'enregistrement (1) sont placés l'un après l'autre dans un moule et sont liés pour former une unité.

10. Procédé selon la revendication 9, caractérisé en ce qu'une couche protectrice (10) dotée d'une couche magnétique est posée et comprimée sur le revêtement.
